# EUROPEAN PATENT APPLICATION

(11) **EP 4 752 433 A1**
(43) Date of publication of application: **03.06.2026**
(21) Application number: 24216156.0
(22) Date of filing: 28.11.2024
(51) Int. Cl.: F21V 8/00

(54) **LIGHTGUIDE DEVICE FOR INDICATING A STATUS OF A MODULE, LIGHTGUIDE ARRANGEMENT AND MODULE COMPRISING THE LIGHTGUIDE DEVICE OR THE LIGHTGUIDE ARRANGEMENT**

(71) Applicant: Robert Bosch GmbH, 70442 Stuttgart (DE)
(72) Inventor: Valente, Filipe, 3880-728 Ovar (PT); Zaviyalov, Alexandr, 85591 Vatterstetten (DE)

(57) **Abstract**

The invention refers to a lightguide device 1 for indicating a status of a module 1 with a light emitting unit 6 for emitting light; and with a lightguide body 7, the lightguide body 7 comprising: a light coupling surface 8 for coupling the emitted light of the light emitting unit 6 into the lightguide body 7, a first light decoupling surface 9 for decoupling a part of the light out of the lightguide body 7; a second light decoupling surface 10 for decoupling another part of the light out of the lightguide body 7, whereby the first light decoupling surface 9 and the second light decoupling surface 10 are angled to each other and a backside light reflecting surface 18, whereby the backside light reflecting surface 18 is arranged opposite to the second light decoupling surface 10, whereby the backside light reflecting surface 18 comprises a first reflecting section 21 for guiding a part of the light to the second light decoupling surface 10.

## Description

### State of the art

The invention refers to a lightguide device for indicating a status of a module, a lightguide arrangement with at least one lightguide device and a module comprising the lightguide device or the lightguide arrangement

Electronic devices often comprise optical signaling modules or elements for an output of information about the electronic device. Such information could refer for example to an on/off-status of the electronic device, transferring data etc. Often such signaling devices are realized with help of LEDs.

The document DE 10 2022 214 419 A1 relates to a method for supporting an inspection of a building facility, wherein information about the building facility is provided automatically for the inspection, whereby the information is provided on a device as a function of an automated identification of the building facility, that the automated identification takes place in that an identification feature of the building facility is detected by the device, in particular optically, and compared with stored identification features, and that the information is provided for the building facility whose stored identification feature matches the detected identification feature. Additional information about the fire alarm system, such as couplers or signaling devices, can also be displayed.

### Disclosure of the invention

According to the invention a lightguide device for indicating a status of a module with the features of claim 1, a lightguide arrangement with the features of claim 12 and a module comprising the lightguide device or the lightguide arrangement with the features of claim 13 are proposed. Further features or advantages of the invention are disclosed by the dependent claims, the description and the figures as attached.

Subject matter of the invention is a lightguide device for indicating a status of a module.

In the broadest sense of the invention, the module may be any module, especially an electric and/or electronic module for any application. The status of the module may refer to a power status, a data status, a data transferring status etc. Summarized, the lightguide device emits light for outputting an information about the status of the module, including the status of data and/or energy connected to or transmitted by the module.

The lightguide device comprises a light emitting unit for emitting light. Preferably, the light is in a visible region and/or visible wavelength range (VIS). The light emitting unit comprises preferably a LED, especially a RGB-LED or a OLED, as a light emitting element.

The lightguide device comprises at least one, especially exactly one lightguide body for guiding the light emitted by the light emitting unit. Preferably the lightguide body is made of a transparent plastic, especially transparent for the light transmitted by the light emitting unit. *lightguide: can be described as a means to channel light from a light source (typically an LED) to where it is required. A lightguide can also be referred to as light pipe. The lightguide is commonly made of glass or plastic (PMMA or PC), which usually have an index of refraction around 1.5. The goal is that, as soon as light enters the lightguide, it becomes trapped inside due to a phenomenon called total internal reflection. The trapped light exits through an extraction feature or through a surface if the incidence angle of light is less than the critical angle.

The lightguide body comprises a light coupling surface for coupling the emitted light of the light emitting unit into the lightguide body. Preferably, the light coupling surface is formed as plane and/or flat surface. In other words, the light emitted by the light emitting unit enters the lightguide body through the light coupling surface.

The lightguide body comprises a first light decoupling surface for decoupling a part of the light out of the lightguide body. Furthermore, the lightguide body comprises a second light decoupling surface for decoupling another part of the light out of the lightguide body. Preferably, the first and/or the second light decoupling surface is/are formed as plane and/or flat surface(s). In other words, the light emitted by the light emitting unit, entered through the light coupling surface mainly leaves the lightguide body through the first and the second decoupling surfaces.

It is proposed, that the first light decoupling surface and the second light decoupling surface are angled to each other. By using the first and second light decoupling surface, which are angled to each other, it is possible to emit the light out of the lightguide body in two different directions, so that the status of the module can be observed from two different viewing angles.

It is idea of the invention, that in some mounting situations of such modules using only one indication light it is difficult to view the indicated status of the module. In order to allow the viewing of the status of the module from different viewing angles, two different indication lights can be used. By using two different indication lights the costs for parts of the indication lights and the manufacturing of the modules increases. According to the invention a lightguide device is proposed, which uses just one light emitting unit for the lightguide body, thereby saving costs for parts and manufacturing, but is able to emit the light through the decoupling surfaces in two different directions, thereby allowing to view the emitted light from two different viewing angles.

The lightguide body comprises a backside light reflecting surface. The backside light reflecting surface is realized as an inner surface of the lightguide body. The backside light reflecting surface is arranged opposite to the second light decoupling surface. The backside light reflecting surface comprises a first reflecting section for guiding a part of the light to the second light decoupling surface. The first reflecting section has the function to deflect light in the direction to the second decoupling surface. The advantage or technical effect of the first reflecting section is therefore to guide light to the second decoupling surface, thereby supporting an equal distribution of the light between the two decoupling surfaces.

The first reflecting section has an angle relative to the light coupling surface, which amounts preferably about 70°-30°, especially about 60° - 40°, especially 50°.

In a preferred embodiment, the first light decoupling surface and the second light decoupling surface are perpendicular to each other. In this embodiment, the emitted light from the decoupling surfaces can be viewed from viewing angles, which are also perpendicular to each other, thereby allowing the observing of the status of the module in many mounting situations of the module.

It is preferred, that the light decoupled from the lightguide body, especially through the first and the second decoupling surfaces, are distributed between the two decoupling surfaces. In order to allow to observe the emitted light, it is especially preferred that at least 30% of the emitted light are decoupled by the first decoupling surface and at least 30% are decoupled by the second decoupling surface. Alternatively or additionally, the emitted light is distributed evenly between the first and the second decoupling surfaces.

Preferably, the first and the second decoupling surfaces are the only surfaces for decoupling the light out of the lightguide body.

In a preferred embodiment, the first decoupling surface and the second decoupling surface form a common edge area, especially a common edge. This embodiment has the advantage, that the lightguide device can be installed so that an edge of the module is used for placing the first and the second decoupling surfaces.

In a preferred practical realization, the lightguide devices is adapted, so that the light is guided in the lightguide body in a main light direction. The light in the main light direction is transmitted through the first light decoupling surface and/or first light decoupling surface is transmitted by the light in the main light direction. The second light decoupling surface is angled to the main light direction.

Additionally or alternatively, the first light decoupling surface is orientated parallel to the light coupling surface and the second light decoupling surface is orientated angled, especially perpendicular, to the light coupling surface.

It is preferred that the backside light reflecting surface comprises a second reflecting section for guiding the light along the main light direction. The second reflecting section is preferably adjacent to the light coupling surface. The first reflecting section is angled to the second reflecting section. Especially, the first reflecting section is angled towards the second decoupling surface more than the second reflecting section. The second reflecting section is part of light guidance for guiding the light along the main light direction. The second reflecting section has an angle to the light coupling surface, which amounts about 100°-70°, especially about 90° - 80°.

It is preferred, that between the first reflecting section and the second reflecting section a curved transition section is arranged in order to adapt the angles of the two reflecting sections and to prevent light escaping out of the lightguide body. The curved transition section is curved outwardly from the second reflecting section in the main light direction.

In a preferred embodiment the lightguide body comprises a frontside light reflecting surface, which is facing the backside light reflecting surface. The frontside light reflecting surface is angled or parallel to the second reflecting section in order to guide the light along the main light direction. Preferably, the frontside light reflecting surface and the second reflecting section are arranged diverging in the main light direction. Furthermore, the lightguide body may comprise side reflecting surfaces, which connect the first and the second light reflecting surfaces. The frontside reflecting surface, which is formed as a plane surface has preferably an angle to the light coupling surface which amounts about 120° - 80°, especially about 110° - 90°, especially 100°.

It is especially preferred, that that side reflecting surfaces and/or the frontside reflecting surface is/are formed as plane or flat surfaces. A cross-section perpendicular to the main light direction is preferably realized as a rectangle, especially along the first reflecting section and/or the second reflecting section. The dimensions of the rectangle may vary along the main light direction.

A further subject-matter of the invention is a lightguide arrangement, which comprises at least two of the lightguide devices as described above.

Preferably the lightguide bodies of the at least two lightguide devices are formed as a one-piece component. Preferably they are formed together in a injection moulding process. The advantage of a one-piece component is, that the one-piece component may be integrated inside the module in a simplified manner compared to two or more separate light guide bodies.

A further subject-matter of the invention is a module comprising the lightguide device or the lightguide arrangement as described above. Preferably the module is realized as an interface module for a security system for buildings, especially a fire detection system. The module is preferably used to transfer signals within the security system.

It is preferred, that the module comprises a housing, whereby the lightguide device and/or the light guide arrangement is integrated in the housing. It is furthermore preferred, that the lightguide body and/or the one-piece-component is overmoulded in the housing to further improve the simplification of the module.

It is preferred, that the module is mountable in at least two orientations on a DIN-rail (or a hat-rail), whereby the two decoupling surfaces supports the observing of the emitted light for indicating the status of the module.

Further advantages, features details of the invention will become apparent by the description of embodiments of the invention and the figures as attached. The figures show:
- Figure 1: a schematic cross-section view of a module 1 with a lightguide device as an embodiment of the invention;
- Figure 2: in the same illustration the module 1 with light paths;
- Figure 3: a three-dimensional illustration of one-piece component with three lightguide bodies;
- Figure 4: a three-dimensional illustration of the module of the previous figures.

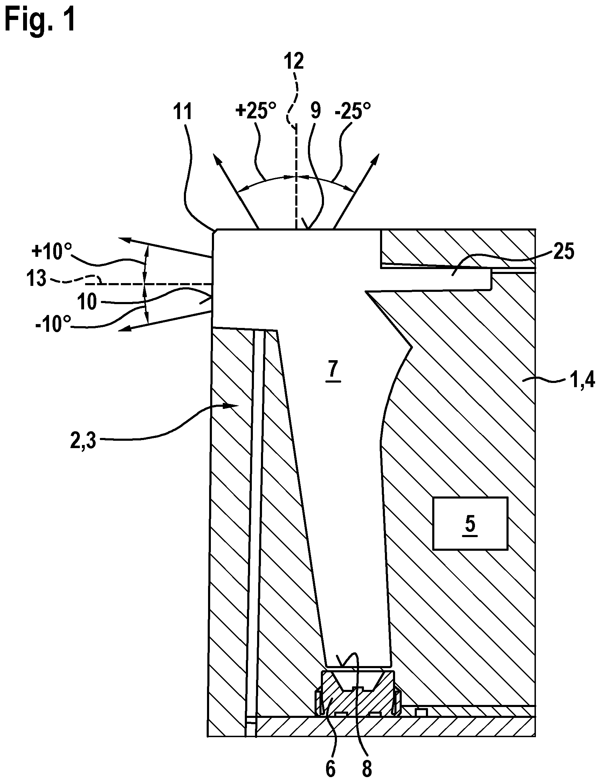

Figure 1 shows in a schematic cross-sectional view of a module 1 with a lightguide device 2, which can be part of a lightguide arrangement 3. The module 1 comprises a housing 4, in which the lightguide device 2 or the lightguide arrangement 3 is arranged. Furthermore, electronic and/or electric components 5 are integrated in the housing 4 for enabling the module 1 to electronic and/or electric functions. For example, the module 1 is embodied as an interface module for a security system, for example a fire security system.

The lightguide device 2 comprises a light emitting unit 6 for emitting light, which can be distributed by the lightguide device 2. The light emitting unit 6 comprises for example a LED source for emitting visible light. The light emitted by the light emitting unit 6 enters a lightguide body 7, which is adapted to guide the light in its interior. The lightguide body 7 comprises a light coupling surface 8, which is an entrance surface for the light from the light emitting unit 6.

The lightguide body 7 comprises a first light decoupling surface 9, which allows to transmit a part of the light out of the lightguide body 7. Furthermore, the lightguide body 7 comprises a second light decoupling surface 10 for transmitting another part of the light out of the lightguide body 7. The first and the second light decoupling surfaces 9, 10 are angled to each other and in this embodiment are perpendicular to each other. Both surfaces 9, 10 form a common edge 11. The first and the second light decoupling surfaces 9, 10 with the common edge 11 form a corner of the module 1 and are arranged in a window of the housing 4 of the module, so that the emitted light can be observed from the exterior.

The main emittance direction 12 of the first light decoupling surface 9 and the main emittance direction 13 of the second light decoupling surface 10 are essentially perpendicular to each other. In this embodiment the angle range of the first light decoupling surface 9 is +/- 25° and of the second light decoupling surface 10 is +/-10°. This allows a user to observe the emitted light from two different viewing directions, which are also perpendicular to each other. The emitted light indicates a status of the module 1, for example its working status, its data transferring status etc.

The total light emitted by the lightguide device 2 is distributed between the two light decoupling surfaces 9, 10. In an optimal configuration, the light is distributed evenly between the two light decoupling surfaces 9,10. At least, each decoupling surface 9, 10 should emit 30% of the total light emitted by the lightguide device 2. In this embodiment the light coupling surface 8 is parallel to the first decoupling surface 9. The second decoupling surface 10 is perpendicular to the light coupling surface 8.

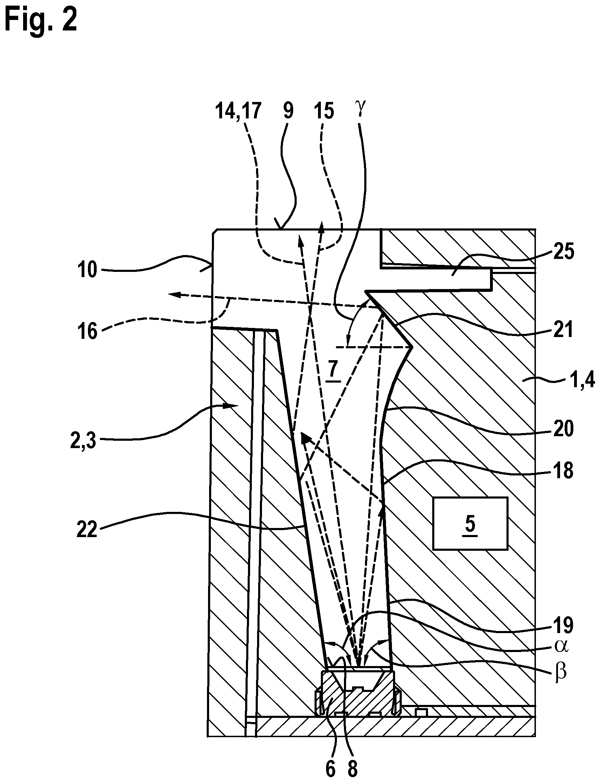

Figure 2 illustrates in the same illustration different light paths 14, 15, 16 for guiding the light entered by the light coupling surface 8 to the light decoupling surfaces 9, 10.

Light path 14 runs from the light coupling surface 8 along a main light direction 17 directly to the first light decoupling surface 9. Light path 15 is reflected in the lightguide body 7 one or more times and ends at the first light decoupling surface 9. Light path 16 is reflected in the lightguide body 7 one or more times and ends at the second light decoupling surface 10.

The lightguide body 7 comprises a backside light reflecting surface 18, which comprises a first reflecting section 21, a transition section 20 and a second reflecting section 19. The backside light reflecting surface 18 is arranged opposite to the second light decoupling surface 10 and realized as an inner surface.

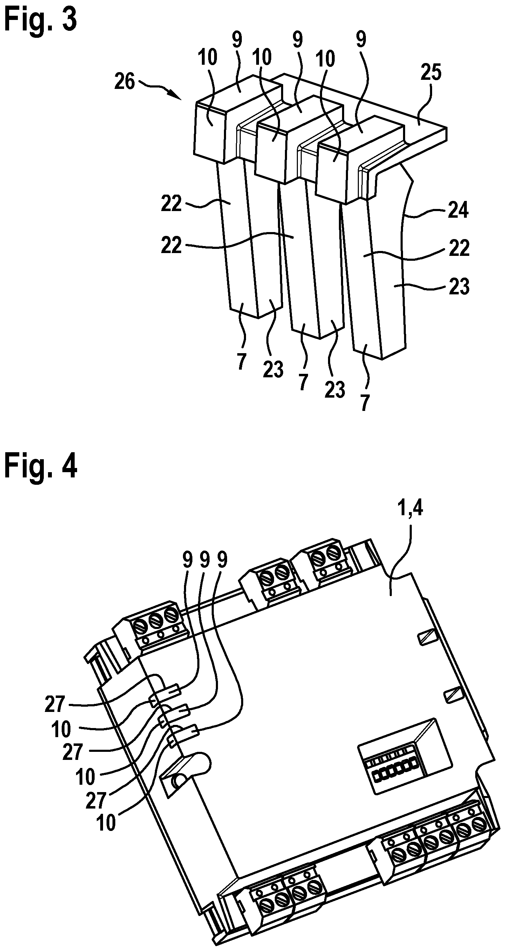

Furthermore, the lightguide body 7 comprises a frontside light reflecting surface 22, which is opposite to the backside light reflecting surface 18. The backside light reflecting surface 18 and the frontside light reflecting surface 22 are connected by side light reflecting surfaces 23, which can be seen in figure 3. The surfaces 22, 23 are embodied as inner surfaces.

Frontside light reflecting surface 22 and side light reflecting surfaces 23 are embodied as plane surfaces, whereby the side reflecting surfaces 23 are rectangular or perpendicular to the frontside light reflecting surface 22. Between side light reflecting surfaces 23 and the backside light reflecting surface 18 edges 24 are formed, whereby the surfaces 23 and 18 form a rectangular angle along the edges 24.

The frontside light reflection surface 22 is a straight section at an angle α between 120°-80°, especially 110°-90°, especially 100°, relative to the light coupling surface 8. The backside light reflection surface 18 starts with the straight second reflecting section 19 at an angle β between 100° - 70°, especially 90° - 80°, relative to the light coupling surface 8 or an horizontal plane, and then transitions to the second reflection section 21 with a curve of constant radius (for example 7- 10 mm) in the transition section 20. The transition radius prevents light from escaping the interior of the lightguide body 7. The first reflecting section 21 is a straight section starting at the end of transition radius and/or the transition section 20 and with an angle γ between 70° 30°, especially between 60° - 40°, especially about 50° relative to horizontal plane and or to a plane parallel to the light coupling surface 8. To guarantee total internal reflection in horizontal direction and/or to the second light decoupling surface 10, which is important to guarantee visibility requirements. The light along the light path 16 is at least one time reflected by the first reflecting section 21. The light along the light path 15 is reflected by the frontside light reflecting surface 22 and/or by the second reflecting section 19.

Furthermore, the geometry 25 is optionally provided for overmoulding - these are required due to requirements of injection moulding process and space constraints.

The surfaces of the lightguide body 7 allow to create the different optical or light paths 14, 15, 16 to allow light output at the required angles. The main optical paths are also shown in Figure 2 and described as follows:
Light path 14: Light goes directly in vertical direction and/or to the first decoupling surface 9.

Light path 15: Light reflects from the second reflecting section 19 to the frontside light reflecting surface 22 and then vertically or light reflects from the frontside light reflecting surface 22 and then vertically and/or to the first decoupling surface 9.

Light path 16: Light reflects on the first reflecting section 21 and then horizontally and/or to the second decoupling surface 10 or light reflects from the frontside light reflecting surface 22 to the first reflecting section 21 and then horizontally and/or to the second decoupling surface 10.

This design setup allows to maximize light output in vertical direction and or through the first light decoupling surface 9 at the specified angles of +/- 25 degrees, while still emitting light in horizontal direction and/or through the second light decoupling surface 10 at an angle range of +/- 10 degrees.

The geometry of the output shape of the lightguide was determined by the geometry of the surrounding housing 4, which required the output surfaces of the lightguide to be flush with the housing external surfaces, due to aesthetic requirements and the fact that the lightguide body 7 was overmoulded into the housing 4.

The proposed lightguide design allows to transfer light from the LED source, that is assembled inside the housing 4, by means of overmoulding process, and emits at specific angles, as shown in the figures: in vertical direction at an angle range of +/-25 degrees relative to surface normal (maximum output) and horizontally at an angle of +/- 10 degrees relative to surface normal (maximum output). The available opening on the housing 4 is not centered with the LED, due to space constraints.

The lightguide design is highly efficient and guiding the light mainly in two required directions and almost no light in the diagonal direction. Such solution is cost-effective, compact, requires only one LED and has low energy consumption.

Figure 3 shows in a three-dimensional illustration of a one-piece component 26 comprising three lightguide bodies 7 as described in the previous figures. The one-piece component 26 is made of a common material segment, which is for example produced in its entirety by an injection moulding process. The one-piece component 26 or the single lightguide body 7 can be overmoulded in the housing 4 of the module 1. For each lightguide body 7 of the one-piece component 26 a light emitting unit 6 is provided. It is possible, that the one-piece component 26 comprises only two lightguide bodies 7 or more than three lightguide bodies 7.

Figure 4 shows the three-dimensional illustration of the module 1. The first light decoupling surface 9 and the second light decoupling surface 10 form a corner in the housing 4 of the module 1. In the module 1 three lightguide devices 2 forming the lightguide arrangement 3 with the one-piece component 26 of figure 3 are used. The first light decoupling surface 9 is in the same plane as a side face of the housing 4, the second light decoupling surface 10 is the same plane as a front face of the housing 4. Recesses 27 of the housing 4 are provided, so that the corner of the housing 4 is formed by the common edges 11.

In this configuration the module 1 can be placed in a broad orientation on a DIN-rail, whereby the front face of the housing 4 is parallel to the DIN-rail and the main emitting direction of the first light decoupling surface 9 is perpendicular to the surface extension of the DIN-rail. Alternatively, the module 1 can be placed in a narrow orientation on the DIN-rail, whereby the side face of the housing 4 is parallel to the DIN-rail and the main emitting direction of the second light decoupling surface 10 is perpendicular to the surface extension of the DIN-rail. In both cases, light emitting from the lightguide devices 2 can be easily observed by a user.

## Claims

1. Lightguide device (1) for indicating a status of a module (1)
with a light emitting unit (6) for emitting light; and
with a lightguide body (7), the lightguide body (7) comprising:
a light coupling surface (8) for coupling the emitted light of the light emitting unit (6) into the lightguide body (7),
a first light decoupling surface (9) for decoupling a part of the light out of the lightguide body (7);
a second light decoupling surface (10) for decoupling another part of the light out of the lightguide body (7),
whereby the first light decoupling surface (9) and the second light decoupling surface (10) are angled to each other,
and a backside light reflecting surface (18), whereby the backside light reflecting surface (18) is arranged opposite to the second light decoupling surface (10), whereby the backside light reflecting surface (18) comprises a first reflecting section (21) for guiding a part of the light to the second light decoupling surface (10).

2. Lightguide device (2) according to claim 1, **characterized in that** the first light decoupling surface (9) and the second light decoupling surface (10) are perpendicular to each other.

3. Lightguide device (2) according to claim 1 or 2, **characterized in that** from the light decoupled from the lightguide body (7), at least 30% are decoupled by the first light decoupling surface (9) and at least 30% are decoupled by the second light decoupling surface (10).

4. Lightguide device (2) according to one of the preceding claims, **characterized in that** the first light decoupling surface (9) and the second light decoupling surface (10) form a common edge area (11).

5. Lightguide device (2) according to one of the preceding claims, **characterized in that** the light is guided in the lightguide body (7) in a main light direction (14), whereby light in the main light direction (14) is transmitted through the first light decoupling surface (9) and the second light decoupling surface (10) is angled to the main light direction (14).

6. Lightguide device (2) according to one of the preceding claims, **characterized in that** the first light decoupling surface (9) is orientated parallel to the light coupling surface (8) and that the second light decoupling surface (10) is orientated perpendicular to the light coupling surface (8).

7. Lightguide device (2) according to one of the preceding claims, **characterized in that** the backside light reflecting surface (18) comprises a second reflecting section (19) for guiding the light along a or the main light direction, whereby the first reflecting section (21) is angled relative to the second reflecting section (19).

8. Lightguide device (2) according to claim 7, **characterized in that** the lightguide body (7) comprises a curved transition section (20) between the first and the second reflecting section (19,21) for preventing the light from escaping of the interior of the lightguide body (7).

9. Lightguide device (2) according to one of the claims 7 to 8 **characterized in that** the light guide body (7) comprises a frontside light reflecting surface (22), whereby the frontside light reflecting surface (22) is arranged opposite to the backside light reflecting surface (18), whereby the frontside light reflecting surface (22) is angled or parallel to the second reflecting section (19) in order to guide the light along the main light direction (14) and/or to the first reflecting surface (21).

10. Lightguide device (2) according to claim 9, **characterized in that** the lightguide body (7) comprises side reflecting surfaces (23), whereby the side reflecting surfaces (23) connect the backside and the frontside light reflecting surfaces (18,22).

11. Lightguide device (2) according to one of the preceding claims, **characterized in that** side reflecting surfaces (23) and/or the frontside reflecting surface (22) is/are formed as plane surfaces.

12. Lightguide arrangement (3) comprising at least two of the lightguide devices (2) of one of the preceding claims, whereby the light guide bodies (7) of the at least two lightguide devices (2) are realized as a one-piece component (26).

13. Module (1) comprising the lightguide device (2) according to claims 1 to 11 or the lightguide arrangement (3) according to claim 12.

14. Module (1) according to claim 13, **characterized in that** the module (1) is realized as an interface module for a security system.

15. Module (1) according to one of the claims 13 or 14, **characterized in that** the module (1) is mountable in at least two orientations on a DIN-rail.
